Europäisches Patentamt

European Patent Office

Office européen des brevets

(11) Publication number: **0 511 406 A1**

## EUROPEAN PATENT APPLICATION
### published in accordance with Art. 158(3) EPC

(21) Application number: **91919808.5**

(22) Date of filing: **14.11.91**

(86) International application number:
**PCT/JP91/01561**

(87) International publication number:
**WO 92/09029 (29.05.92 92/12)**

(51) Int. Cl.5: **G06F 3/03**

(30) Priority: **16.11.90 JP 310275/90**
**19.11.90 JP 313394/90**

(43) Date of publication of application:
**04.11.92 Bulletin 92/45**

(84) Designated Contracting States:
**DE FR GB IT NL**

(71) Applicant: **SEIKO INSTRUMENTS INC.**
**31-1, Kameido 6-chome Koto-ku**
**Tokyo 136(JP)**

(72) Inventor: **KANNO, Yosuke**
**Seiko Instruments Inc., 31-1, Kameido**
**6-chome**
**Koto-ku, Tokyo 136(JP)**

(74) Representative: **Fleuchaus, Leo, Dipl.-Ing. et al**
**Melchiorstrasse 42**
**W-8000 München 71(DE)**

(54) DEVICE FOR READING OUT COORDINATE.

(57) A device for reading out coordinates which is provided with a part for reading out coordinates in which a plurality of exciting wire groups and a plurality of sensing wire groups are laid, a coordinate indicator which has a resonance circuit comprising a coil and a capacitor, and in which one or more series circuits each of which comprises a switch and a capacitor are connected in parallel with the resonance circuit, a first selecting circuit which selects successively the exciting wire groups, a second selecting circuit which selects successively the sensing wire groups, an exciting circuit which is connected with the first selecting circuit and feeds exciting signals, each having a frequency neighbouring the resonance frequency of the resonance circuit, to the exciting wire groups, an amplitude sensing circuit which is connected with the second selecting circuit and senses the amplitudes of induction signals induced in the sensing wire groups, a phase sensing circuit which senses the phases of the induction signals induced by the exciting signals, an amplitude storing means which stores the output of the amplitude sensing circuit, a phase storing means which stores the output of the phase sensing circuit, a controlling circuit which judges the states of the switches in the coordinate indicator according to the difference between the output of the amplitude sensing circuit and the information stored in the amplitude storing means and to the difference between the output of the phase sensing circuit and the information stored in the phase storing means.

EP 0 511 406 A1

FIG. 1

## TECHNICAL FIELD

The present invention relates to a cordless coordinate reading system for inputting coordinates into an external device such as a computer and, more particularly, to a wireless coordinate reading system which need not have a connection between its body and a coordinate indicator through a signal line.

## BACKGROUND ART

In order to detect the state of a switch or the like attached to a coordinate indicator of a coordinate reading system in which an electromagnetic coupling between an excitation line group and a detection line group laid in a coordinate reading area is interfaced through a resonance circuit attached to the coordinate indicator and having a coil and a first capacitor, there is a method in which the phase of an induction signal produced in the detection line group by connecting/disconnecting a second capacitor in parallel with said resonance circuit by turning ON/OFF the switch to change the resonance frequency of the resonance circuit is changed to determine the switch state from the rate of change in the phase.

In case, for example, the second capacitor is connected in parallel with the resonance circuit by turning on the switch, the resonance frequency of the resonance circuit changes to a lower level so that the phase of the induction signal changes to delay. From this, the delay in the phase of the induction signal from the phase of the excitation signal is detected and compared with a constant threshold value to decide the switch state.

On the other hand, there is known a method in which the phase of an induction signal produced in the detection line group by transmitting the depression pressure to a pressure sensitive resistance element connected in parallel with said resonance circuit to change the resonance frequency of the resonance circuit is changed to determine the depression pressure from the rate of change in the phase.

In case, for example, the resistance of the pressure sensitive resistance element is decreased with an increase in the depression pressure of the switch, the resonance frequency of the resonance circuit gradually changes to a lower level so that the phase of the induction signal gradually changes to delay. From this, the delay in the phase of the induction signal from the phase of the excitation signal is detected and compared with a constant reference to decide the existence of the depression and is converted into the depression pressure.

In the coordinate reading system of this kind, generally speaking, an electromagnetic shielding member such as a metal plate is often placed below the coordinate reading area to shield unnecessary noises or the like from the outside.

In this case, however, the distance between the coordinate indicator and the electromagnetic shielding member will change to change the inductance of the coil composing the resonance circuit of the coordinate indicator so that the resonance circuit has its resonance frequency changed to exert influences upon the phase of the induction signal. In case the coordinate indicator moves apart from the coordinate reading area, for example, the inductance of the coil increases to decrease the resonance frequency of the resonance circuit to delay the phase of the induction signal.

In the prior art, therefore, in case the coordinate indicator moves apart from the coordinate reading area, the delay in the phase of the induction signal exceeds a threshold value for deciding the switch state or the depression. Thus, it may possibly be misjudged that the switch is ON or that the depression has occurred.

In order to avoid the misjudgment for deciding the switch state, a sufficiently large value for the delay of the phase of the induction signal produced as a result of movement of the coordinate indicator has to be used as the threshold value for deciding the switch state, so that the phase range effective for the switch state decision is reduced. In case, for example, a plurality of switches are incorporated so that a plurality of threshold values are to be set for deciding their states, the margins between the threshold values disappear to raise another problem that the dispersion of the phase due to the using circumstances, agings and individual differences cannot be absorbed.

If the reference value for deciding the depression is increased in the method for deciding the switch depression, the delay in the phase cannot exceed the decision reference, in case the depression pressure of the switch is relatively low, thus raising another problem that the depression itself cannot be decided.

## DISCLOSURE OF THE INVENTION

In order to solve the above-specified problems, according to a first invention, there is provided a wireless coordinate reading system which comprises: a coordinate reading area having a plurality of excitation line groups and a plurality of detection line groups laid in superposition; a coordinate indicator having a resonance circuit composed of a coil and a first capacitor and having one or a plurality of series circuits connected in parallel with the resonance circuit; a first selection circuit for selecting the excitation line groups sequentially; a second selection circuit for selecting the detection line groups sequentially; an excitation circuit connected with the first selection circuit for feeding the excitation line groups with an excitation signal having a frequency in the neighborhood of the resonance frequency of the resonance circuit of the coordinate indicator; an amplitude detecting circuit connected with the second selection circuit for detecting the amplitude of an induction signal induced in the detection line groups; a phase detecting circuit for detecting the phase of the induction signal with respect to the excitation signal; amplitude memory means for storing the output of the amplitude detecting circuit; phase memory means for storing the output of the phase detecting circuit; and a control circuit for deciding the state of the switch in the coordinate indicator from both the difference between the output of the amplitude detecting circuit and the data stored in the amplitude memory means and the difference between the output of the phase detecting circuit and the data stored in the phase memory means.

In a second invention, moreover, the aforementioned coordinate indicator in the first invention is exemplified by a coordinate indicator having a resonance circuit composed of a coil and a capacitor and having a pressure sensitive resistance element connected in parallel with the resonance circuit for converting the depression pressure into a resistance value, and the aforementioned control circuit is exemplified by a control circuit for deciding the depression in the coordinate indicator from both the difference between the output of the amplitude detecting circuit and the data stored in the amplitude memory means and the difference between the output of the phase detecting circuit and the data stored in the phase memory means.

BRIEF DESCRIPTION OF DRAWINGS

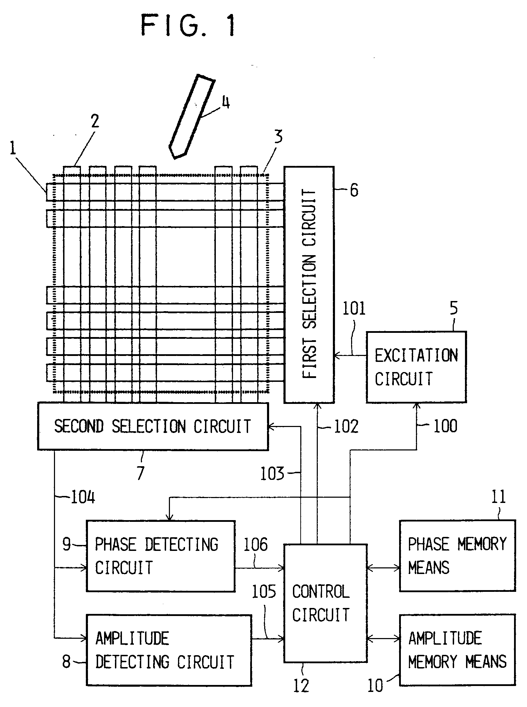

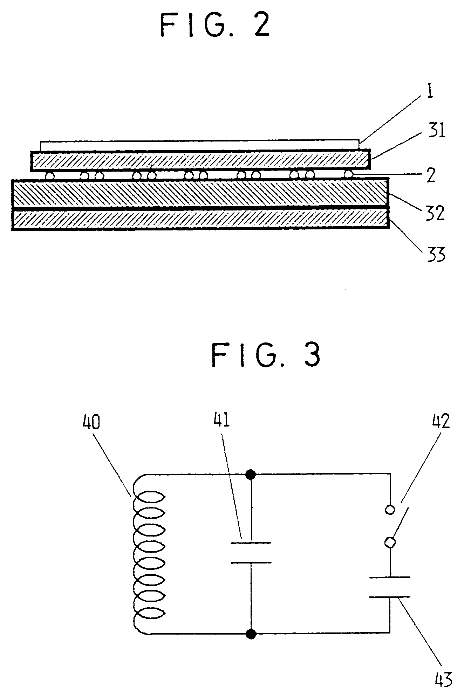

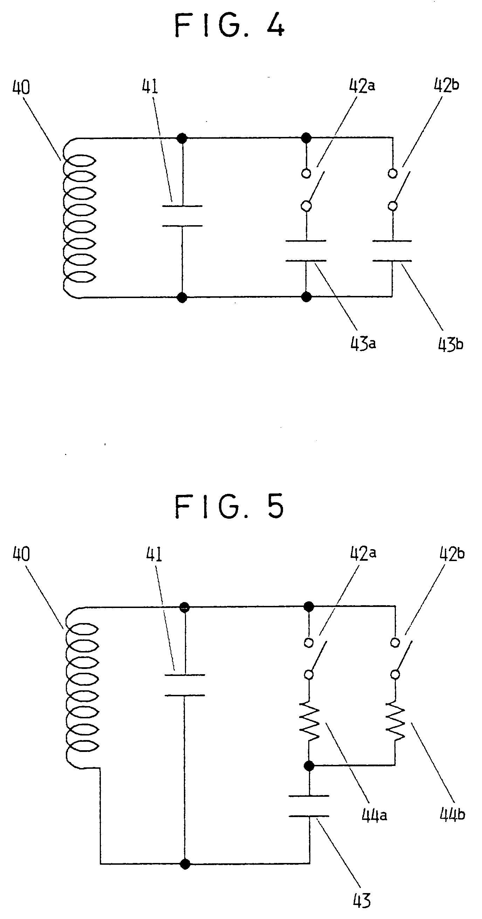

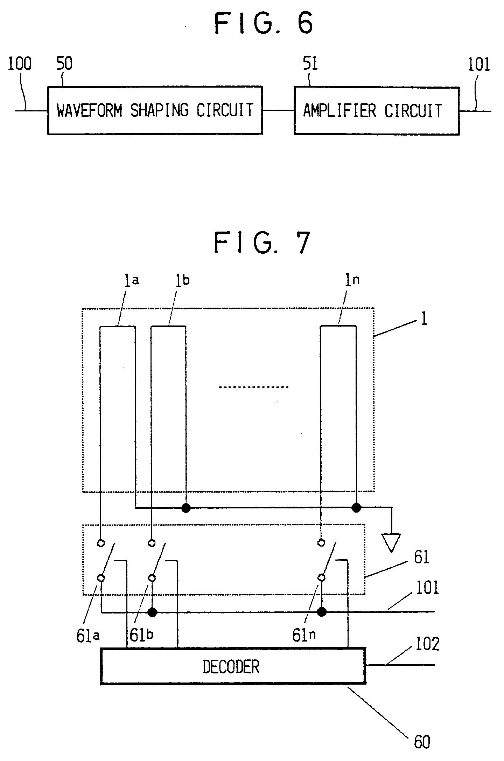

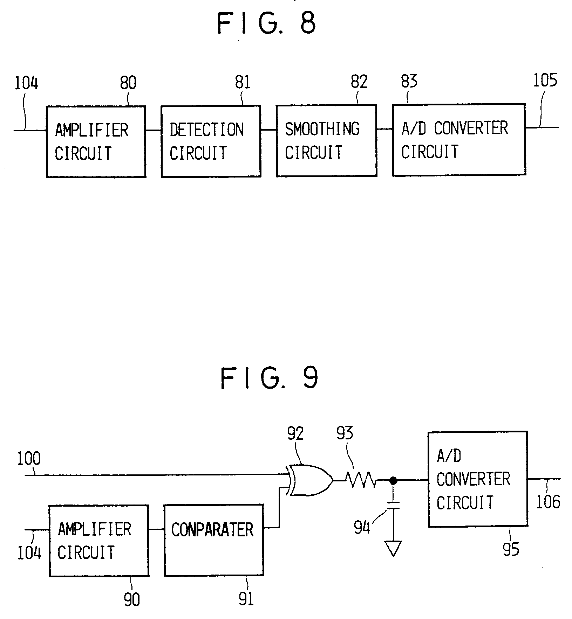

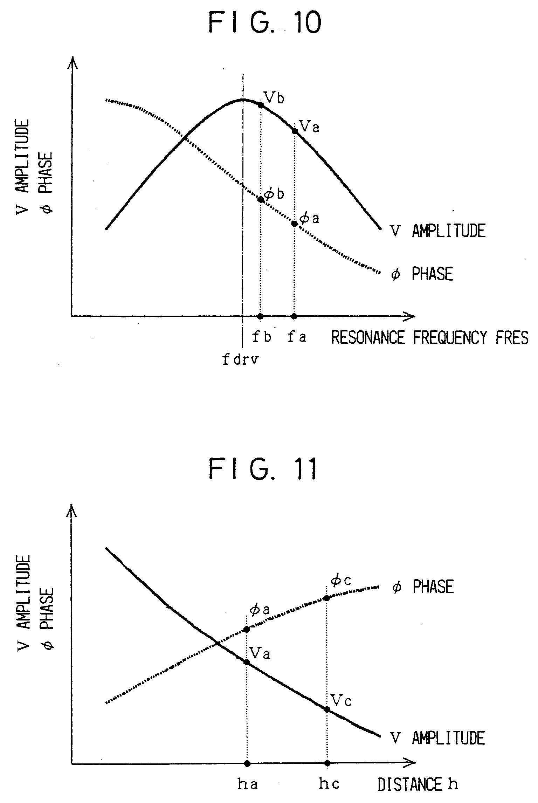

In Figs. 1 to 11 showing the first invention: Fig. 1 is a diagram for explaining a structure of a coordinate reading system; Fig. 2 is a section showing a coordinate reading area; Fig. 3 is a circuit diagram showing a coordinate indicator of a first embodiment; Fig. 4 is a circuit diagram showing a coordinate indicator of a second embodiment; Fig. 5 is a circuit diagram showing a coordinate indicator of a third embodiment; Fig. 6 is a diagram for explaining a structure of an excitation circuit; Fig. 7 is a diagram for explaining a structure of a selection circuit; Fig. 8 is a diagram for explaining a structure of an amplitude detecting circuit; Fig. 9 is a diagram for explaining a structure of a phase detecting circuit; Fig. 10 is a diagram for explaining the amplitude and phase of an induction signal when a switch is depressed; and Fig. 11 is a diagram for explaining the amplitude and phase of the induction signal against the distance of the coordinate indicator.

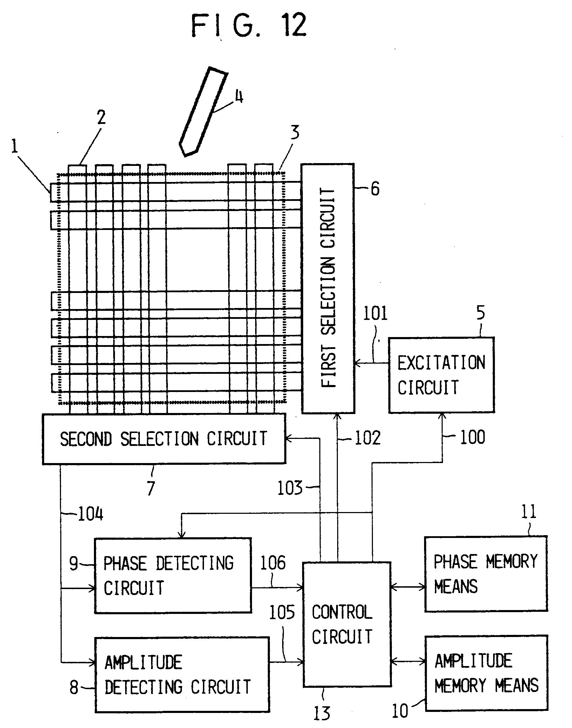

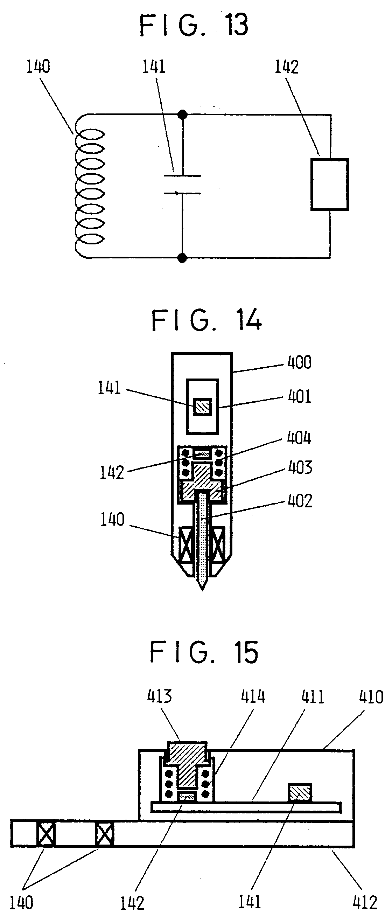

In Figs. 12 to 15 showing the second invention, on the other hand: Fig. 12 is a diagram showing a coordinate reading system; Fig. 13 is a circuit diagram showing a coordinate indicator; Fig. 14 is a diagram showing a structure of a stylus pen; and Fig. 15 is a diagram showing a structure of a cursor.

BEST MODE FOR CARRYING OUT THE INVENTION

A first embodiment of the first invention will be described in the following with reference to Fig. 1. Fig. 1 is a diagram showing a structure of the coordinate reading system according to the present invention. In Fig. 1: reference numeral 1 designates excitation line groups; numeral 2 detection line groups; and numeral 3 a coordinate reading area which is constructed by arranging the excitation line groups 1 and the detection line groups 2 individually at an equal spacing and at a right angle. Numeral 4 designates a coordinate indicator having a resonance circuit, as will be described hereinafter. Numeral 5 an excitation circuit for feeding an excitation signal 101 to the excitation line groups 1. Numeral 6 designates a first selection circuit for selecting the excitation line groups sequentially, and numeral 7 designates a second selection circuit for selecting the detection line groups 2 sequentially. Numeral 8 designates an amplitude detecting circuit for detecting the amplitude of an induction signal 104 produced in the detection line groups, and numeral 9 designates a phase detecting circuit for detecting the phase of the induction signal 104. Numeral 10 designates amplitude memory means for storing an output 105 of the amplitude detecting circuit 8, and numeral 11 designates phase memory means for storing an output 106 of the phase detecting circuit 9. These means 10 and 11 are individually constructed of a RAM (i.e., Random Access Memory). Numeral 12 designates a control circuit which is constructed of a microprocessor.

Fig. 2 is a section showing the coordinate reading area 3. In Fig. 2, the excitation line groups 1 and the detection line groups 2 are individually laid in the two faces of a circuit substrate 31, which is arranged therebelow with an electromagnetic shielding member 33 through a spacer 32.

Fig. 3 shows a circuit owned by the coordinate indicator 4. In Fig. 3, numerals 40 and 41 designate a coil and a capacitor, respectively, which constitute together an LC resonance circuit. Numerals 42 and 43 a switch and a second capacitor, respectively, which are connected in series with each other and further in parallel with the aforementioned LC resonance circuit.

Fig. 6 is a diagram showing a structure of the excitation circuit 5. In Fig. 6, numeral 50 a waveform shaping circuit, and numeral 51 designates an amplifier circuit. The waveform shaping circuit 50 shapes the waveform of a square excitation clock 100 inputted from the control circuit 12 and transforms it into a sine wave, which is amplified by the amplifier circuit 51 to output the excitation signal 101.

Fig. 7 is a diagram showing a structure of the first selection circuit 6. In Fig. 7, numeral 60 designates a decoder, and numeral 61 designates a switch element group. In response to a first selection signal 102 inputted from the control circuit 12, the decoder 60 turns on one of the individual switch elements 61a to 61n of the switch element group 61. As a result, the excitation signal 101 inputted from the excitation circuit 5 is fed to that one the individual excitation lines 1a to 1n of the excitation line group 1, which corresponds to the ON switch element.

The second selection circuit 7 has a structure identical to that of the first selection circuit 6 so that its detail is not shown. What is different resides in that the second selection circuit 7 selects the detection line group 2 in accordance with a second selection signal 103 to output the induction signal 104 produced in the selected detection line, whereas the first selection circuit 6 selects the excitation line group 1 in accordance with the first selection signal 102 to feed the excitation signal 101 to the selected excitation line.

Fig. 8 is a diagram showing a structure of the amplitude detecting circuit. In Fig. 8: numeral 80 designates an amplifier circuit; numeral 81 a detection circuit; numeral 82 a smoothing circuit such as a low-pass filter; and numeral 83 an A/D converter circuit. The amplitude detecting circuit 8 inputs the induction signal 104 through the amplifier circuit 80, the detection circuit 81, the smoothing circuit 81 and the A/D converter circuit 83 in the recited order to output the signal 105 which is produced by digitizing the amplitude of the induction signal 104.

Fig. 9 is a diagram showing a structure of the phase detecting circuit 9. In Fig. 9: numeral 90 designates an amplifier circuit; numeral 91 a comparator; numeral 92 an exclusive OR element; numeral 93 a resistor; numeral 94 a capacitor; and numeral 95 an A/D converter circuit. The induction signal 104 is amplified by the amplifier circuit 90 and is transformed into a square wave by the comparator 91 until it is connected with one input of the exclusive OR element 92. This exclusive OR element 92 has its other input connected with the excitation clock 100 so that it outputs a pulse signal which expresses in a pulse width the phase difference of the induction signal 104 from the excitation clock 100. The resistor 93 and the capacitor 94 constitutes together an integration circuit which integrates the output of the exclusive OR element 92 to convert it into a voltage signal expressing the aforementioned phase difference in a voltage. The A/D converter circuit 95 outputs the signal 106 which is produced by digitizing the aforementioned voltage signal.

Incidentally, the structures of the amplitude detecting circuit 8 and the phase detecting circuit 9 are not essential of the present invention, but it is sufficient that those circuits 8 and 9 can convert the amplitude of the induction signal 104 and the phase difference of the induction signal from the excitation signal 101 into signals which can be processed by the control circuit 12. Thus, various structures could be conceived but should not be restricted to those of the present embodiment.

The operations of the present embodiment will be described in the following. In Fig. 1, the control circuit 12 outputs not only the excitation clock 100 to the excitation circuit 5 but also the first selection signal 102 so that the first selection circuit 6 may select the individual excitation lines of the excitation line group 1 sequentially. As a result, the selected excitation lines are sequentially fed with the excitation signal 101 to generate an alternating magnetic field. On the other hand, the control circuit 12 outputs the second selection signal 103 so that the second selection circuit 7 may select the individual detection lines of the detection line group 2 sequentially while an arbitrary one excitation line is being selected. As a result, the detection line thus selected is connected with the amplitude detecting circuit 8 and the phase detecting circuit 9. The control circuit 12 repeats the operations thus far described. These operations will be called the "scanning". Incidentally, the scanning order should not be limited to that of the aforementioned example but may repeat the sequential selections of the excitation lines while an arbitrary detection line is being selected.

Here, in case the coordinate indicator 4 is not positioned over the coordinate reading area 3, the excitation lien group and the detection line group 2 run at a right angle so that no induction current is generated in the detection line group 2 by the alternating magnetic field generated in the excitation line group 1. In case, on the other hand, the coordinate indicator 4 is positioned over the coordinate reading area 3, an electromagnetic coupling is established between the excitation line in the neighborhood of the coordinate indicator 4 and the coil 40 in the coordinate indicator 4 and between the coil 40 and the detection line in the neighborhood of the coordinate indicator 4 and is outputted as the induction signal 104 through the second selection circuit 7, when said excitation line and said detection line are selected in the aforementioned scanning operation.

The degree of the electromagnetic coupling has a correlation to the distance from said excitation line and said detection line to the coordinate indicator 4 so that said induction current has its magnitude changing with the position of the coordinate indicator 4. Thus, the coordinate values indicating the position of the coordinate indicator 4 can be calculated by sequentially inputting through the amplitude detecting circuit 8 the amplitude of the induction signal 104 when the excitation lines and the detection lines in the neighborhood of the position of the coordinate indicator 4 are scanned in the control circuit 12. The coordinate calculating method is not the gist of the present invention so that its detail will be omitted.

Next, here will be described a decision of the state of a switch which is carried on the coordinate indicator 4 in accordance with the gist of the present invention.

It is assumed in the resonance circuit of the coordinate indicator 4 shown in Fig. 3 that the resonance frequency be set to a value slightly higher than the excitation frequency of the excitation signal 101 in case of the switch is OFF. If the switch is then turned on, the second capacitor 43 is connected in parallel with the resonance circuit, so that the resonance frequency changes to a lower value, i.e., the excitation frequency. As a result, the induction signal obtained by the aforementioned scanning is changed to have a larger amplitude and a more delayed phase in case the switch of the coordinate indicator 4 is ON than in case the same is OFF. These behaviors will be further described with reference to Fig. 10.

The behaviors of these changes will be further described with reference to Fig. 10. In Fig. 10, the abscissa indicates a resonance frequency $f_{res}$ of the coordinate indicator 4, and the ordinates indicates the amplitude V and the phase $\phi$ of the induction signal 104. Moreover, letters $f_{drv}$ designate the excitation frequency of the excitation signal 101. As shown in Fig. 10, the amplitude V takes its maximum, when the resonance frequency $f_{res}$ is coincident with the excitation frequency $f_{drv}$, and grows the smaller as the resonance frequency $f_{res}$ shifts the more from the excitation frequency $f_{drv}$. On the contrary, the phase $\phi$ is characterized to delay monotonously as the resonance frequency $f_{res}$ drops. Here, it is assumed that the resonance frequency $f_{res}$ in case the switch is OFF is set to a value $f_a$ slightly larger than the excitation frequency $f_{drv}$. Then, the amplitude V takes a value $V_a$, and the phase $\phi$ takes a value $\phi_a$. If, on the contrary, the resonance frequency $f_{res}$ is changed to a lower value, i.e., the excitation frequency $f_{drv}$ and is shifted to a value $f_b$ in case the switch is turned on to connect the second capacitor 43, the amplitude V takes a value $V_b$, and the phase takes a value $\phi_b$. In short, it is understood from Fig. 10 that the amplitude V is changed to increase from the value $V_a$ to the value $V_b$ whereas the phase $\phi$ is changed to delay from the value $\phi_a$ to the value $\phi_b$ when the switch is shifted to the ON state.

In case, on the other hand, the coordinate reading area 3 is underlain by the electromagnetic shielding member 33 of a metal plate or the like, as shown in Fig. 2, that is, in case the distance between the coil 40 in the coordinate indicator 4 and the electromagnetic shielding member 3 increases, the resonance frequency of the resonance circuit of the coordinate indicator 4 drops so that the phase of the induction signal 104 also changes to delay as in case the switch is turned on. Therefore, it is impossible to decide the switch state only from the change in the phase. If, however, the amplitude of the induction signal 104 is noted in this case, the distance between the coordinate indicator 4 and the coordinate reading area 3 is increased to decrease the degrees of electromagnetic coupling between the excitation line group 1 and the coil 40 in the coordinate indicator 4 and between the coil 40 and the detection line group so that the amplitude of the induction signal 104 changes to decrease. These behaviors will be described with reference to Fig. 11. In Fig. 11, the abscissa indicates the distance h between the coordinate indicator 4 and the coordinate reading area 3, and the ordinate indicates the amplitude V and the phase $\phi$ of the induction signal 104. Fig. 11 shows the characteristics, in which the amplitude V gradually decreases whereas the phase $\phi$ gradually delays as the distance H increases. Here will be considered the case, in which the coordinate indicator 4 moves from a distance $h_a$ to a distance $h_c$, namely, in which the coordinate indicator 4 changes to move apart from the coordinate reading area 3. Then, it is understood that the amplitude V changes to decrease from the value $V_a$ to a value $V_c$ whereas the phase $\phi$ delays from the value $\phi_a$ to a value $\phi_c$.

In case the switch of the coordinate indicator 4 is turned on and in case the switch is moved apart from the coordinate reader 3, as has been described hereinbefore with reference to Figs. 10 and 11, the change in the amplitude is inverse although the change in the phase of the induction signal 104 is similar. Thus, this is noted in the present invention so that whether or not the switch is depressed is decided not from the change in the phase only but from the changing directions of the phase and the amplitude.

Reverting to Fig. 1, the decision of the switch depression will be further described. In Fig. 1, as has been described hereinbefore, the control circuit 12 scans the excitation line group 1 and the detection line group 2 in the neighborhood of the coordinate indicator 4 and inputs the amplitudes of the induction signal 104 sequentially through the amplitude detecting circuit 8 so as to calculate the coordinate values indicated by the coordinate indicator 4. In order to decide the switch state, the phase of the induction signal 104 is inputted in parallel through the phase detecting circuit 9, and the individual changes in the amplitude and phase obtained when the excitation line and the detection line in predetermined positional relations to the coordinate indicator 4 in the aforementioned scanning are detected. The phase could be detected while the neighborhood of the coordinate indicator 4 is scanned so that the induction signal 104 is produced. Considering the S/N ratio, however, the detection of the phase is preferable when the amplitude of the induction signal 104 takes its maximum, namely, when the excitation line and the detection line closest to the coordinate indicator 4 are selected. Therefore, the control circuit 12 achieves the amplitude and phase changing directions of the induction signal 104 by scanning the excitation line group 1 and the detection line group 2 repeatedly, by storing the output 105 of the amplitude detecting circuit 8 in the amplitude memory means 10, when the amplitude of the induction signal 104, i.e., the output 105 of the amplitude detection circuit 8 takes the maximum in one scanning cycle, by storing the phase of the induction signal 104 obtained simultaneously, i.e., the output 106 of the phase detecting circuit 9 in the phase memory means 11, and by comparing the magnitudes of the output 105 and the output 106, which are obtained under the same condition in the subsequent scanning cycle. After this comparison, the output 105 and the output 106 are likewise stored in the amplitude memory means 10 and the phase memory means 11 so that they may be compared in the subsequent scanning cycle. By repeating the foregoing processing steps, the control circuit 12 detects the amplitude and phase changing directions of the induction signal 104 sequentially for each scanning and decides that the switch is turned on, if the changing rates of the phase and the amplitude exceed individual constant threshold values when the phase changes to delay and when the amplitude changes to increase. After the decision of the switch depression, moreover, the control circuit 12 decides that the switch-off state is restored, if the phase of the induction signal 104 is lower than the value when the aforementioned switch depression is decided.

Fig. 4 shows a circuit of the coordinate indicator in a second embodiment. In the first embodiment, the coordinate indicator has one switch, as shown in Fig. 3, but the present embodiment is exemplified by having two switches. In Fig. 4, the numeral 40 designates the coil, and the numeral 41 designates the first capacitor. These elements constitute an LC resonance circuit, as in Fig. 3. Numerals 42a and 42b designate switches, and numerals 43a and 43b designate second capacitors. The switch 42a and capacitor 43a and the switch 42b and capacitor 43b are individually connected in series with each other and further in parallel with the aforementioned LC resonance circuit. Specifically, the capacitor 43a is connected in parallel with the resonance circuit, if the switch 42a is turned on, and the capacitor 43b is connected if the switch 42b is turned on. If the capacitors 43a and 43b have their capacities set to different values, the rates of change of the phases of the induction signals when the switches 42a and 42b are individually turned on can be made different. In this case, therefore, by setting two threshold values for the rates of change of the phases in the control circuit 12, it is possible to decide which of the switches 42a and 42b is turned on. The states of the plurality of switches can naturally be likewise decided if the plurality of series circuits of switches and capacitors are connected in parallel with the LC resonance circuit to set the plurality of threshold values.

Fig. 5 shows a circuit of the coordinate indicator 4 in a third embodiment. The present embodiment presents another one which is equipped with two switches. In Fig. 5, the numeral designates the coil, and the numeral 41 designates the first capacitor. These elements constitute the LC resonance circuit as in Fig. 3. The numerals 42a and 42b designates the switches; the numeral 43 designates the second capacitor; and numerals 44a and 44b designate resistance elements. The switch 42a and resistance element 44a and the switch 42b and resistance element 44b are individually connected in series to constitute switch sub-circuits. These switch sub-circuits are connected in parallel with each other and further in parallel with the aforementioned LC resonance circuit. Specifically, the series circuit of the resistance element 44a and the capacitor 43 is connected in parallel with the resonance circuit, if the switch 42a is turned on, and the series circuit of the resistance element 44b and the capacitor 43 is connected in parallel if the switch 42b is turned on. Here, the rates of change of the phases of the induction signals in case the switches 42a and 42b are individually turned on can be made different by setting the resistance values of the resistance elements 44a and 44b to different values. In the second embodiment, the plurality of capacitors having the different capacities are connected in parallel with the resonance circuit in accordance with the switches turned on. In the present embodiment, on the contrary, the rates of change of the phases are made different by connecting the resistance elements having the different resistance values in series with the common second capacitor and further in parallel with the resonance circuit. Generally speaking, since the resistance elements having higher accuracies and number of effective figures than those of the capacitors can be easily obtained, the present embodiment is advantageous in that the rates of change of the phases can be easily set. In this case, too, it is possible to decide like the second embodiment which of the switches 42a and 42b is turned on. By connecting a plurality of the aforementioned switch sub-circuits in parallel, moreover, the states of a plurality of switches can be decided.

Next, an embodiment according to the second invention will be described with reference to the diagram of Fig. 12. In Fig. 12, the control circuit 13 and the coordinate indicator 14 are different from those of the first embodiment, but the remaining structure is similar to that of the embodiments according to the first invention.

Fig. 13 shows a circuit owned by the coordinate indicator. In Fig. 13, numeral 140 designates a coil, and numeral 141 designates a capacitor. These elements constitutes an LC resonance circuit. Numeral 142 designates a pressure sensitive resistance element which is connected in parallel with the aforementioned LC resonance circuit.

Figs. 14 and 15 are diagrams showing the structures of a stylus pen and a cursor, which exemplify the coordinate indicator 14 specifically.

In Fig. 14, numeral 400 designates a casing, and numeral 401 designates a circuit substrate. In the casing 400, there are fixed the coil 140 and the circuit substrate 401. In this circuit substrate 401, there is arranged the capacitor 141 which is so connected that the coil 140 and the pressure sensitive resistance element 142 constitute the LC resonance circuit shown in Fig. 13 (although the wiring lines are omitted from Fig. 14). Numeral 402 designates a stylus core; numeral 403 a chuck; and numeral 404 a coil spring. The stylus core 402 is fixed in the chuck 403, and the stylus core 402 and the chuck 403 can move relative to the casing 400. However, the chuck 403 is biased apart from the pressure sensitive resistance element 142 by the coil spring 404. In case, therefore, the stylus pen is caused to indicate the coordinate reading area 3 (i.e., depressed), the pressure sensitive element 142 is pressed the more through the stylus core 402 and the chuck 403 as the depression pressure increases, and the chuck 403 and the stylus core 402 are returned by the coil spring 404, as the depression pressure decreases, so that the pressure sensitive element 142 is released from the pressure.

In Fig. 15, on the other hand: numeral 410 designates a casing; numeral 411 a circuit substrate; and numeral 412 a base. The circuit substrate 411 is fixed in the casing 410, and the coil 140 is fixed in the base 412. The circuit substrate 411 is arranged with the capacitor 141, and the coil 140 and the pressure sensitive resistance element 142 are connected to constitute the LC resonance circuit shown in Fig. 13 (although the wiring lines are omitted from Fig. 15). Numeral 413 designates a cursor button, and numeral 414 designates a coil spring. The cursor button 413 is made movable relative to the casing 410 and is urged apart from the pressure sensitive element 142 by the coil spring 414. As a result, in case of the depression of the cursor button 413, the pressure sensitive resistance element 142 is pressed the more, as the depression pressure increases the more, and the cursor button 413 is returned by the coil spring 414, as the depression pressure decreases, so that the pressure sensitive resistance element 142 is released from the pressure.

Next, the operations of the present embodiment will be described in the following. The "scanning operation" for selecting the excitation lines and the detection lines sequentially is similar to that of the embodiments according to the first invention and will be omitted. What will be described is the decision of the depression of the switch carried on the coordinate indicator 14 according to the gist of the present invention.

It is assumed in the resonance circuit of the coordinate indicator 14 shown in Fig. 13 that the resonance frequency be set to a value slightly higher than the excitation frequency of the excitation signal 101 in case of no switch depression. If the switch is then depressed, this depression pressure is transmitted to the pressure sensitive resistance element 142 to decrease the resistance, as has been described hereinbefore, so that the resonance frequency changes to a lower value, i.e., the excitation frequency. As a result, the induction signal obtained by the aforementioned scanning is changed to have a larger amplitude and a more delayed phase in case of the depression of the switch of the coordinate indicator 14 than in case of no depression. The behaviors of these changes will be further described again with reference to Fig. 10.

Here, it is assumed that the resonance frequency $f_{res}$ in case of no switch depression is set to a value $f_a$ slightly larger than the excitation frequency $f_{drv}$. Then, the amplitude V takes a value $V_a$, and the phase $\phi$ takes a value $\phi_a$. If, on the contrary, the resonance frequency $f_{res}$ is changed to a lower value, i.e., the excitation frequency $f_{drv}$ and is shifted to a value $f_b$ in case of the switch depression by the decrease in the resistance of the pressure sensitive resistance element 42, the amplitude V takes a value $V_b$, and the phase takes a

value $\phi_b$. In short, it is understood from Fig. 10 that the amplitude V is changed to increase from the value $V_a$ to the value $V_b$ whereas the phase $\phi$ is changed to delay from the value $\phi_a$ to the value $\phi_b$ by the switch depression.

In case, on the other hand, the coordinate reading area 3 is underlain by the electromagnetic shielding member 33 of a metal plate or the like, as shown in Fig. 2, and in case the coordinate indicator 14 is moved apart from the coordinate reading area 3, that is, in case the distance between the coil 140 in the coordinate indicator 14 and the electromagnetic shielding member 33 increases, the resonance frequency of the resonance circuit of the coordinate indicator 14 drops so that the phase of the induction signal 104 also changes to delay as in case the switch is depressed. Therefore, it is impossible to decide the switch depression only from the change in the phase. If, however, the amplitude of the induction signal 104 is noted in this case, the distance between the coordinate indicator 14 and the coordinate reading area 3 is increased to decrease the degrees of electromagnetic coupling between the excitation line group 1 and the coil 140 in the coordinate indicator 14 and between the coil 140 and the detection line group so that the amplitude of the induction signal 104 changes to decrease. These behaviors will be described again with reference to Fig. 11. In case the coordinate indicator 14 moves from a distance $h_a$ to a distance $h_c$, namely, that is, in case the coordinate indicator 14 changes to move apart from the coordinate reading area 3. Then, it is understood that the amplitude V changes to decrease from the value $V_a$ to a value $V_c$ whereas the phase $\phi$ delays from the value $\phi_a$ to a value $\phi_c$.

In case the switch of the coordinate indicator 14 is depressed and in case the switch is moved apart from the coordinate reading area 3, as has been described hereinbefore with reference to Figs. 10 and 11, the change in the amplitude is inverse although the change in the phase of the induction signal 104 is similar. Thus, this is noted in the present invention so that whether or not the switch is depressed is decided not from the change in the phase only but from the changing directions of the phase and the amplitude.

The decision of the switch depression is similar to that of the embodiments according to the first invention. The control circuit 13 achieves the amplitude and phase changing directions of the induction signal 104 by storing the output 105 of the amplitude detecting circuit 8 in the amplitude memory means 10 while scanning, when the amplitude of the induction signal 104, i.e., the output 105 of the amplitude detection circuit 8 takes the maximum in one scanning cycle, by storing the phase of the induction signal 104 obtained simultaneously, i.e., the output 106 of the phase detecting circuit 9 in the phase memory means 11, and by comparing the magnitudes of the output 105 and the output 106, which are obtained under the same condition in the subsequent scanning cycle. After this comparison, the output 105 and the output 106 are likewise stored in the amplitude memory means 10 and the phase memory means 11 so that they may be compared in the subsequent scanning cycle. By repeating the foregoing processing steps, the control circuit 13 detects the amplitude and phase changing directions of the induction signal 104 sequentially for each scanning and decides that the switch is depressed, if the changing rates of the phase and the amplitude exceed individual constant threshold values when the phase changes to delay and when the amplitude changes to increase. After the decision of the switch depression, moreover, the control circuit 13 decides that the switch-off state is restored, if the phase of the induction signal 104 is lower than the value when the aforementioned switch depression is decided.

In order to determine the depression pressure while the switch is being depressed, the changing rate of the phase can be calculated with reference to the phase of the induction signal 104 at the instant when the depression is decided, for example, to convert the changing rate into the depression pressure. By changing the set values of the aforementioned threshold values, moreover, the sensitivity to the switch depression can be varied.

INDUSTRIAL APPLICABILITY

As has been described hereinbefore, according to the first invention, in the coordinate reading system, in which the electromagnetic coupling between the plurality of excitation line groups and the plurality of detection line groups laid in the coordinate reading area is interfaced through the resonance circuit carried in the coordinate indicator, the second capacitor is connected/disconnection in parallel with the resonance circuit by turning ON/OFF the switch carried in the coordinate indicator to change the resonance frequency of the resonance circuit so that the phase and the amplitude of the induction signal obtained in the detection line groups may be changed.

According to the second invention, moreover, in the coordinate reading system, in which the electromagnetic coupling between the plurality of excitation line groups and the plurality of detection line groups laid in the coordinate reading area is interfaced through the resonance circuit carried in the coordinate indicator, the depression pressure of the switch or the like carried in the coordinate indicator is transmitted to the pressure sensitive resistance elements connected in parallel with the resonance circuit to change the resonance frequency of the resonance circuit so that the phase and the amplitude of the induction signal obtained in the detection line groups may be changed. Moreover, these phase and amplitude are individually detected by the phase detecting circuit and the amplitude detecting circuit so that the depression of the switch is decided from their individual changing directions by the control circuit.

Thus, it is possible to realize a cordless coordinate reading system which can decide the state of the switch carried in the coordinate indicator without connecting the coordinate reading system body and the coordinate indicator through any signal line.

Especially in case the coordinate reading area is underlain by the electromagnetic member such as a metal plate, the phase of the induction signal is changed by the change in the distance from the coordinate indicator so that the decision of the switch state is troubled in the method of the prior art. This trouble can be eliminated in the present invention.

Since, moreover, the phase of the induction signal at the time of transition of the switch to the ON state is dispersed due to the temperature changes, agings and individual differences of the individual elements composing the resonance circuit of the coordinate indicator and the individual elements composing the individual circuits of the coordinate reading apparatus body, the prior art is equipped with an adjusting mechanism for adjusting the constants of the individual circuits to correct the dispersion in case the absolute threshold value is set as a reference for deciding the switch state with respect to the phase of the induction signal. In the present invention, however, the reference for the switch state decision is relatively set at each time of turning on the switch, and the rate of change from this reference is compared for the switch decision with the constant threshold value. As a result, the present invention can realize a wireless coordinate reading system which can always decide the switch state without any necessity for the adjusting mechanism of the prior art, irrespective of the using circumstances and years or without losing the interchangeability of the coordinate indicator.

**Claims**

1. A coordinate reading system comprising:

a coordinate reading area having a plurality of excitation line groups and a plurality of detection line groups laid in superposition;

a coordinate indicator having a resonance circuit composed of a coil and a first capacitor and having one or a plurality of series circuits each composed at least a switch and a second capacitor connected in parallel with said resonance circuit;

a first selection circuit for selecting said excitation line groups sequentially;

a second selection circuit for selecting said detection line groups sequentially;

an excitation circuit connected with said first selection circuit for feeding said excitation line groups with an excitation signal having a frequency in the neighborhood of the resonance frequency of the resonance circuit of said coordinate indicator;

an amplitude detecting circuit connected with said second selection circuit for detecting the amplitude of an induction signal induced in said detection line groups;

a phase detecting circuit for detecting the phase of said induction signal with respect to said excitation signal;

amplitude memory means for storing the output of said amplitude detecting circuit;

phase memory means for storing the output of said phase detecting circuit; and

a control circuit for deciding the state of the switch in said coordinate indicator from both the difference between the output of said amplitude detecting circuit and the data stored in said amplitude memory means and the difference between the output of said phase detecting circuit and the data stored in said phase memory means.

2. A coordinate reading system as set forth in Claim 1,

wherein said coordinate indicator is one having a resonance circuit composed of a coil and a capacitor and having a pressure sensitive resistance element connected in parallel with said resonance circuit for converting the depression pressure into a resistance value, and

wherein said control circuit is one for deciding the depression in said coordinate indicator from both the difference between the output of said amplitude detecting circuit and the data stored in said amplitude memory means and the difference between the output of said phase detecting circuit and the data stored in said phase memory means.

# F I G. 1

# FIG. 2

# FIG. 3

# FIG. 4

# FIG. 5

## F I G. 6

## F I G. 7

# F I G. 8

104    80    81    82    83    105

| AMPLIFIER CIRCUIT | DETECTION CIRCUIT | SMOOTHING CIRCUIT | A/D CONVERTER CIRCUIT |

# F I G. 9

100

92   93

A/D CONVERTER CIRCUIT

106

AMPLIFIER CIRCUIT

CONPARATER

94

95

104

90   91

# F I G. 10

# F I G. 11

# FIG. 12

# F I G. 13

# F I G. 14

# F I G. 15

# INTERNATIONAL SEARCH REPORT

International Application No  PCT/JP91/01561

**I. CLASSIFICATION OF SUBJECT MATTER** (if several classification symbols apply, indicate all) 6

According to International Patent Classification (IPC) or to both National Classification and IPC

Int. Cl$^5$  G06F3/03

**II. FIELDS SEARCHED**

| Minimum Documentation Searched 7 | |
|---|---|
| Classification System | Classification Symbols |
| IPC | G06F3/03-3/033, G06K11/06 |

Documentation Searched other than Minimum Documentation
to the Extent that such Documents are Included in the Fields Searched 8

| | |
|---|---|
| Jitsuyo Shinan Koho | 1925 - 1991 |
| Kokai Jitsuyo Shinan Koho | 1971 - 1991 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| X | JP, A, 63-70326 (Wacom K.K.), March 30, 1988 (30. 03. 88) & US, A, 4878553 & EP, A2, 259894 | 1, 2 |
| X | JP, A, 63-279315 (Wacom K.K.), November 16, 1988 (16. 11. 88), (Family: none) | 1, 2 |
| X | JP, A, 63-280321 (Wacom K.K.), November 17, 1988 (17. 11. 88), (Family: none) | 1, 2 |
| Y | JP, A, 64-2121 (Wacom K.K.), January 6, 1989 (06. 01. 89), (Family: none) | 2 |

* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| January 24, 1992 (24. 01. 92) | February 18, 1992 (18. 02. 92) |
| International Searching Authority | Signature of Authorized Officer |
| Japanese Patent Office | |

Form PCT/ISA/210 (second sheet) (January 1985)